# EUROPEAN PATENT SPECIFICATION

(11) **EP 1 062 102 B1**
(45) Date of publication and mention of the grant of the patent: **08.01.2003**
(21) Application number: 98912596.8
(22) Date of filing: 20.03.1998
(51) Int. Cl.: B42C 9/00, C09J 5/02

(54) **A BOOKBINDING PROCESS**
VERFAHREN ZUM BUCHBINDEN
PROCEDE DE RELIURE

(43) Date of publication of application: 27.12.2000
(73) Proprietor: National Starch and Chemical Investment Holding Corporation, Wilmington, Delaware 19809 (US)
(72) Inventor: CARTER, David, Hertfordshire WD3 5RG (GB); GATH, Mary, High Wycombe, Buckinghamshire HP14 3LD (GB); TAGESEN, Kim, D-67434 Neustadt (DE); RICHTER, Ulrich, D-76694 Forst (DE)
(74) Representative: Spencer, Michael David, Dr.
(86) International application number: GB9800845
(87) International publication number: WO99048698

(56) References cited:
- EP-A- 0 568 803
- US-A- 4 960 295

## Description

The present invention relates to a method of binding books, compounds for use in the binding of books and the products of such bookbinding.

Previously proposed methods are described in documents such as US-A-4960295 and EP-A-0568803. Previous such methods have involved stacking sheets of paper, which will make up the pages of a book. Such stacks of pages are normally referred to as the "signature". Generally a number of such signatures are stacked together to form a book block which is held together by a clamp. The book block then has its spine area cut to remove any folding in the sheets that has resulted from the stacking process. This edge is then roughened, normally using some form of abrasive such as for instance a sanding disk or notching blade. The block may then be primed with a hot melt or aqueous primer. This stage however is optional. The book spine then has spine glue applied to it, which may be hot melt adhesive, aqueous adhesive or reactive hot melt adhesive. Both the application of the primer and the spine glue are normally carried out by rollers. The purpose of the primer is to ensure better adhesion of the spine glue to the spine. Once the spine glue has been applied, the cover is then added to the book block to create the bound book. Alternatively it can be the case that the spine glue is applied to the cover rather than to the spine.

This method is widely used and provides reasonable results with ordinary uncoated papers. However, with heavily coated papers such as those found in books containing photographs this process is not so effective. The spine glue does not penetrate into the fibres at the end of the book block and as a result the sheets are not well bound. Furthermore there is a likelihood of penetration of the adhesive between the individual sheets of the book block resulting in an unpleasing visual result. So currently many of these books are produced by traditional sewing methods.

It is an aim of the present invention to provide a method of binding books and substances for use therein that overcomes these problems.

The first aspect of the present invention relates to a book binding apparatus comprising a station for creating a book block, a station for roughening the spine of the book block, a station for gluing a cover to the spine of the book block in which the apparatus has a further station for pre-priming the spine of the book block between the roughening station and the gluing station.

This provides the advantage that the fibres of the spine can be treated with a pre-primer which is readily absorbed by the paper before gluing of the spine to the cover is commenced. This results in increased adhesion by the cover to the spine. Furthermore, it reduces the amount of leakage of adhesive into the leaves of the bound book. The adhesion of the cover to the book is increased, especially with heavily coated papers and results in higher page pull strengths. Furthermore, it requires less preparation of the spine beforehand. When using reactive hot melt glues as the spine glue the initial page strength and the cure speed is significantly improved.

Preferably the apparatus has a further station for coating the spine of the book block with primer between the pre-priming station and the gluing station. This has the advantage that a primer can be provided to improve the adhesion of the spine glue. Furthermore, it allows combinations of adhesives to be used.

In a preferred embodiment the pre-priming station and the priming station are constructed such that they are part of the same station.

Preferably the station comprises a bath with two rollers for adding the pre-primer and the primer to the spine of the book block with a wall dividing the tank between the two rollers so that the two fluids do not mix. This provides the advantage that many existing commercial book binding machines already have a primer station which has two rollers. By dividing the primer tank, such a machine is convertible to the present invention.

A second aspect of the present invention relates to a method of binding sheet material which comprises the step of creating a book block from individual sheets of sheet material, preparing the intended spine for binding, and gluing a cover to the spine, in which the method includes the further step of applying a pre-primer to the spine before the cover is glued to the spine. This method provides the advantage that the cover adheres better to the prepared spine with higher page pull strength and less bleeding of the adhesive into the bound book.

Preferably the method includes the further step of coating the spine of the book with a primer between coating the spine with pre-primer and gluing the cover. This has the advantage that the primer improves the adhesion of the cover.

A third aspect of the present invention relates to a pre-primer for binding sheet material which comprises water or an aqueous solution. This provides the advantage that when heavily coated papers are used the water is easily absorbed by the fibres to create improved adhesion between the spine glue and the spine when later added.

Preferably the aqueous solution contains one or more of the following compounds, polyvinyl alcohols, cellulosics, starches, synthetic polymer dispersions, water soluble or dispersable polymers, surfactants. The advantage of using these compounds is that further improvements in the adhesion of the cover of the book can be obtained.

Preferably the polyvinyl alcohol is one or more selected from the following list; Polyvinyl Alcohol hydrolysis 98-100%, viscosity 3.5-72 mPa.s Polyvinyl Alcohol hydrolysis 95-98.8%, viscosity 3.5-72 mPa.s, Polyvinyl Alcohol hydrolysis 86-89%, viscosity 3.0-56 mPa.s, Polyvinyl Alcohol hydrolysis 71-82%, viscosity 4-52 mPa.s, Polyvinyl Alcohol hydrolysis 42-50%, viscosity 55-63 mPa.s.

An effective range for the polyvinyl alcohol comprises 1 to 25wt% of the solution, 5 to 20wt% was found to be preferable and 15 to 18wt% was found to be optimal. The polyvinyl alcohol preferably has a low degree of polymerisation.

In a preferred embodiment the cellulosic is one or more selected from the following list; hydroxyethyl cellulose, hydroxypropylmethyl cellulose, carboxymethyl cellulose, ethylhydroxyethyl cellulose, hydrophobically modified hydroxyethyl cellulose.

Preferably the cellulose has a low molecular weight and may also comprise 0.1 to 3.0 wt% of the solution.

Advantageously the starch is one or more selected from the following list; cereal starches, such as corn, wheat, rice or barley, tuber and root starches such as potatoes, tapioca roots or arrow root or sago starches, etherified or esterified starches.

Preferably the starch comprises 0.1 - 20.0wt% solution.

Preferably the synthetic polymer dispersion is one or more selected from the following list; polyvinyl acetates, vinyl acetate/ethylene copolymers, acrylics, starch grafted acrylics, vinyl acetate/ethylene/acrylic acid ester terpolymers, polyurethanes, vinyl propionates, acrylates such as methyl acrylate, ethyl acrylate, 2-ethylhexyl acrylate, butyl acrylate, copolymers of vinyl acetate with vinyl laurate, maleic acid ester, vinyl chloride, crotonic acid and versatic ester of versatic acid, styrene acrylic acid esters.

Preferably the synthetic polymer dispersion is between 0.5 and 90% dispersion. Advantageously between 40.60 and 50.0% dispersion.

In a preferred embodiment the water soluble or dispersable polymer comprises a polymer of one or more selected from the following list; ethylene glycol diacetate, glycerol triacetate, glycerol diacetate, triethylene glycol, sodium polyacrylate, carbamide, 1,2,3-propanetriol, polyvinyl pyrrolidone, 2-(2-butoxyethoxy) ethyl acetate, carbitol acetate, butyl carbitol acetate, butyl carbitol, ethyl carbitol, butyl cellosolve, ethyl cellosolve, 2,2,4-trimethyl 1,3-pentane diol monoisobutyrate, 2,2,4-trimethyl 1,3-pentane diol diisobutyrate, 2,2,4-trimethyl 1,3-pentane diol, polyurethane, acrylate esters, xanthan gum, guar gum, alkali swellable acrylic based associative thickeners, hydrophobe modified ethoxylate urethane, polyacrylic acid, sulphonated polystyrene, polethylene oxide, polyalkylene glycol.

Advantageously the surfactant is one or more selected from the following list; alcohol ethoxylates, castor oil ethoxylates, aromatic ethoxylate, fatty acid sulphonate, dodecyl benzene sulphonic acids, coconut diethanolamides, fatty acid esters, ethoxylated alkyloamides, alkyl amphodiacetates, amido betaines, amine betaines, alkyl benzene sulphonic acids and salts, alkyl sulphosuccinates, alkyl sulphosuccinamates, alpha olefin sulphonates, aromatic hyrdocarbon sulphonic acids and blends, aromatic hydrocarbon sulphonate salts and condensates, fatty alcohol ethoxy sulphates, fatty alcohol sulphates, phosphate esters, alkyl dimethylamines, quarternary ammonium compounds, alkyl phenol ethoxylates, amine oxides, ethylene glycol esters, ethylene oxide/propylene oxide condensates, fatty acid dialkanolamides, fatty acid monoalkanolamides, fatty acid monoalkanolamide ethoxylates, fatty amine alkoxylates, fatty alcohol ethoxylates, fatty alcohols.

The final aspect of the present invention is directed to a book produced by the apparatus described above or produced using the pre-primers described above.

Coated papers for which this method is suitable cover a wide variety of papers produced by many manufacturers to their own composition. These papers often have up to three different coatings so that the actual fibre content of the paper can be no more than 60-65% of the finished sheet, often these coatings have pigments added to them such as china clay, calcium carbonate, talc, titanium dioxide or other synthetic pigments. Such coatings may also have binders such as latex, starch, polyvinyl acetate, casein, gelatine or protein, these bind pigment together, and to the paper. The binders may also result in the paper being hydrophobic or hydrophilic. Coatings often include process aids such as defoamers, dispersing agents, preservatives, and viscosity modifiers. The present invention is suitable for use with papers coated with all these substances, however this list should not be taken as exhaustive.

An example of a binding machine made in accordance with the present invention will now be described in relation to the attached drawings in which:

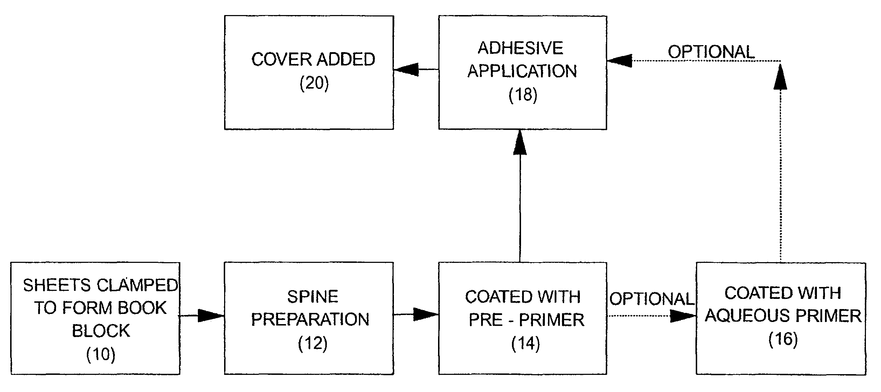

Figure 1 shows a schematic drawing of such a machine; and
Figure 2 shows a cross section through the pre-primer bath of such a machine.

The sheet material is stacked in signatures and the number of signatures are clamped together to form a book block in station 10. The book block is then honed along its intended spine and the spine is roughened using a sanding disk in station 12. The book block is then passed to station 14 where the spine is coated by a pre-primer. Optionally the book block is passed to a further station 16 where the spine of the book block is coated with a primer either a hot melt glue or an aqueous primer. The book block is then-passed to station 18 for adding the spine glue which is either a hot melt adhesive, a reactive hot melt adhesive or an aqueous adhesive. This station 18 may be omitted if the book cover already has the hot melt adhesive or the reactive hot melt adhesive added to it. The book block is then passed to station 20 where the cover is added to the book block.

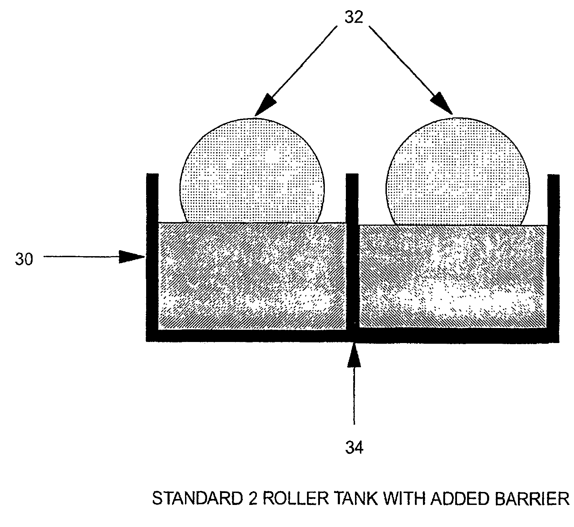

Figure 2 shows a combined preprimer and primer station used for coating the spine with pre-primer and primer. The bath 30 has two rollers 32, one for adding the pre-primer and one for adding the primer. The bath 30 is divided by a wall 34 which may be added if not originally present. Therefore the first roller and part of the tank coats the spine of the book block with preprimer and the second roller and part of the tank coats the book block with primer.

Examples of pre-priming solutions will now be described with the assistance of the following tables which describe:
- Table 1: Evaluation of primers on coated paper
- Table 2: Evaluation of use of preprimer
- Table 3: Evaluation of various preprimer/primer/spine glue combinations
- Table 4: Sample compositions
- Table 5: Sample compositions (Polyvinyl alcohols)
- Table 6: Sample compositions (Cellulosics)
- Table 7: Sample compositions
- Table 8: Sample compositions
- Table 9: Page pull results
- Table 10: Evaluation of formulated primer
- Table 11: Evaluation of formulated primer
- Table 12: Raw materials used

### TEST METHOD USED FOR OBTAINING PAGE PULL RESULT

Individual sheets of papers were gathered together to form a book block and one side was chosen to act as the book spine. This side was passed over a rotating sanding disc on a Sulby Minabinda to prepare the spine for binding.

The block of papers was assembled into a wooden clamp so that the sheets of paper could not slip whilst being handled. The prepared spine stood 3 to 5 mm proud of the clamp for ease of handling.

The preprimer was brushed onto the prepared spine and then, if used, the primer was brushed on top without any preliminary drying. The book block was then placed under an Infra Red lamp for 20 seconds with the treated spine upwards. The prepared spine reached a maximum temperature of 50-70°C during this process.

The spine glue (hot melt or aqueous based) was then poured onto the dried spine and smoothed into a film with a thickness of 0.5-1.0 mm. This film was then quickly pressed onto crêpe paper commonly used in bookbinding processes. The book was left for 5 minutes before removal from the clamp and final storage for 16-20 hours at 23°C and 50% relative humidity before testing. In all cases 2 books of each experimental system were made.

After storage the books were page pull tested on an instrument, the EFG Page Pull Tester from Bookbinding Advisory Services which removes a page from the book and displays the force required. This value is divided by the length of the spine to give the page pull strength expressed as N/cm. A minimum of three pages are tested from each book and the figure quoted in the tables is an average.

For the purposes of testing the paper initially used was 43 gsm catalogue paper (Tables 3, 9, 10, 11). For verification of promising systems the paper was changed to 150gsm triple coated glossy paper (Tables 1, 2).

Using the method described above for page pull, three primers were tested without the use of pre-primer. The primers were aqueous dispersions, Envafilm204, Envafilm 325 and Twinflex R501. The spine glue was a reactive hot melt glue Purfect 111. The tests shown in Table 1 demonstrated that Twinflex R501 was the best primer to use.

Using the primer Twinflex R501 and the spine glue Purfect 111 the page pull strength was then tested with and without a preprimer comprising water, the results are shown in Table 2.

Various aqueous primers and spine glues were also tested with and without a polyvinyl alcohol preprimer in Table 3. The improved page pull results demonstrate the effectiveness of the preprimer.

Further tests were conducted using different classes of preprimer.

### 1. POLYVINYL ALCOHOLS

Various combinations of polyvinyl alcohols were tested which had differing levels of hydrolysis and degrees of polymerisation (viscosity) in Tables 4 and 5. The best results were obtained with a low degree of polymerisation. The effective range of solution was found to be 1 to 25wt%, most effective range was 5 to 20wt% and the optimum range was 15-18wt%.

### 2. CELLULOSICS

Various water soluble celluloses were tested in Table 6. The best results were obtained with low molecular weight compounds. The effective range of solution was found to be 0.1 to 3.0wt%.

### 3. STARCH

Potato and corn starches were tested in Table 8, samples 60, 61 and 66 to 70. The effective range of solution was found to be 0.1 to 20.0 wt%.

### 4. SYNTHETIC POLYMER DISPERSIONS IN WATER

Some homopolymer and copolymer dispersions containing one or more of the following; vinyl acetate, acrylic or ethylene, were tested. The results are shown in Table 7, samples 53 to 58 Dispersions between 0.5 to 90.0% dispersion were tested which is equivalent to 0.3 to 50.0% polymer. The most effective range appeared to be 46.0 to 50.0% dispersion.

### 5. WATER SOLUBLE OR DISPERSABLE POLYMERS

Various polymers were tested, e.g. polyvinyl pyrrolidone, polyacrylate, polyacrylamide, polypropylene glycol, polyurethane, butyl diglycol acetate, and the results are shown in Table 4, samples 6 to 10 and 20 to 23.

### 6. SURFACTANTS

An anionic and some cationic surfactants were tested, and the results are shown in Table 4, samples 9, 22, 24, 25 and Table 7, samples 47 and 48.

### 7. EVALUATION OF FORMULATED PRIMERS

In order to evaluate the results of the pre-primer versus aqueous primers tests on various aqueous primer combinations were conducted and the results are shown in Tables 10 and 11. These show that despite varying the primer formula the use of an aqueous pre-primer results in considerably increased page pull strengths with regard to the finished product. These Tables suggest that even when reformulated the aqueous primer systems do not produce the improved page pull strengths that result from the use of a pre-primer.

Details of the abbreviations used in the tables are given in Table 12.

**Table 1**

| Evaluation of primers on 150gsm coated paper | | | | |
|---|---|---|---|---|
| PAGE PULL RESULTS FOR AQUEOUS PRIMERS (Newtons/cm) | | | | |
| PRIMER | HOT MELT | 90 gsm paper | 135 gsm paper | 150 gsm paper |
| Envafilm 204 | Purfect 111 | 2.4 | 0.3 | 3.8 |
| Envafilm 325 | Purfect 111 | 1.7 | 4.3 | 5.6 |
| Twinflex R501 | Purfect 111 | 5.1 | 7.0 | 6.8 |

**Table 2**

| Evaluation of preprimer | | | |
|---|---|---|---|
| PAGE PULL RESULTS (150gsm coated paper) | | | |
| PREPRIMER | PRIMER | HOT MELT | NEWTONS/CM |
| None | Twinflex R501 | Purfect 111 | 4.3 |
| Water | Twinflex R501 | Purfect 111 | 7.8 |

**Table 3**

| Evaluation of various preprimer/primer/hot melt combinations | | | | |
|---|---|---|---|---|
| PAGE PULL RESULTS (Various adhesive systems) | | | | |
| PREPRIMER | PRIMER | SPINE GLUE | SPINE GLUE TYPE | NEWTONS/CM |
| | | Purfect 111 | Reactive hot molt | 2.2 |
| | Twinflex R501 | Purfect 111 | Reactive hot male | 2.7 |
| 10.8% Airvol 205 | Twinflex R501 | Purfect 111 | Reactive hot melt | 5.7 |
| 10.8% Airvol 205 | | Purfect 111 | Reactive hot melt | 3.9 |
| | | | | |
| | | Twinflex R513 | BVA hot melt | 1.5 |
| | Twinflex R501 | Twinflex R513 | EVA hot melt | 2.2 |
| 10.8% Airvol 205 | Twinflex R501 | Twinflex R513 | EVA hot melt | 5.1 |
| | | | | |
| | | Twinflex 558 | Thermoplastic rubber hot melt | 0 |
| | Twintlex R501 | Twinflex 558 | Thermoplastic rubber hot melt | 2.6 |
| 10.8% Airvol 205 | Twinflex R501 | Twinflex 558 | Thermoplastic rubber hot melt | 4.4 |
| | | | | |
| | | Bindflex 63 | Aqueous polyvinyl acetate | 1.4 |
| | Bindflex 75 | Bindflex 63 | Aqueous polyvinyl acetate | 2.1 |
| 10.8% Airvol 205 | Bindflex 75 | Bindflex 63 | Aqueous polyvinyl acetate | 2 7 |

**Table No. 4**

| Sample compositions (parts per hundred in water) | | | | | | | | |
|---|---|---|---|---|---|---|---|---|
| POLYVINYL ALCOHOL PREPRIMER SAMPLES | | | | | | | | |
| | A107 | A205 | A1126 | BDGA | Polyol 1028A | D1490 | VR90 | DC90 |
| 1 | 5.1 | | | | | | | |
| 2 | 10.1 | | | | | | | |
| 3 | 13.0 | | | | | | | |
| 4 | 15.6 | | | | | | | |
| 5 | 5.0 | 5.0 | | | | | | |
| 6 | 10.0 | | | 1.2 | | | | |
| 7 | 12.7 | | | 2.0 | | | | |
| 8 | 9.8 | | | 3.0 | | | | |
| 9 | 9.6 | | | 3.0 | | 2.0 | | |
| 10 | 9.3 | | | 3.2 | 5.0 | | | |
| 11 | 9.9 | | | | | 2.0 | | |
| 12 | 12.6 | | | | 3.0 | | | |
| 13 | | 5.0 | | | | | | |
| 14 | | 9.9 | | | | | | |
| 15 | | 10.8 | | | | | | |
| 16 | | 11.9 | | | | | | |
| 17 | | 15.3 | | | | | | |
| 18 | | 16.4 | | | | | | |
| 19 | | 24.2 | | | | | | |
| 20 | | 9.3 | | 3.0 | 5.0 | | | |
| 21 | | 9.7 | | 1.6 | | | | |
| 22 | | 9.8 | | 3.0 | | | | |
| 23 | | 11.9 | | 2.0 | | | | |
| 24 | | 11.9 | | | | | 1.0 | |
| 25 | | 11.9 | | | | | | 1.0 |
| 26 | | 16.0 | | 3.0 | | | | |
| 27 | | 16.0 | | | 5.0 | | | |
| 28 | | | 6.0 | | | | | |
| 29 | | | | 3.0 | | | | |
| 30 | | | | | 5.0 | | | |

**Table No 5**

| Sample compositions (parts per hundred in water) | | | |
|---|---|---|---|
| POLYVINYL ALCOHOL PREPRIMER SAMPLES | | | |
| | A107 | A205 | 17/88S |
| 31 | 13.0 | | |
| 32 | 16.0 | | |
| 33 | | 13.0 | |
| 34 | | 15.0 | |
| 35 | | | 7.0 |
| 36 | | | 8.8 |

**Table No. 6**

| Sample compositions (parts per hundred in water) | | | | | |
|---|---|---|---|---|---|
| CELLULOSIC PREPRIMER SAMPLES | | | | | |
| | A4M | CRT 30G | CRT100G | MW 400GB | XC 3000C |
| 37 | 0.1 | | | | |
| 38 | 0.1 | | | | |
| 39 | | 2.0 | | | |
| 40 | | | 0.1 | | |
| 41 | | | 2.0 | | |
| 42 | | | | 0.1 | |
| 43 | | | | 2.0 | |
| 44 | | | | | 0.1 |
| 45 | | | | | 2.0 |

**Table No. 7**

| Sample compositions (parts per hundred in water) | | | | | | | | | |
|---|---|---|---|---|---|---|---|---|---|
| MISCELLANEOUS PREPRIMER SAMPLES | | | | | | | | | |
| | water | bdga | 1028A | N40 | glucose | PVP K60 | EP400 | 8481 | V205 |
| 46 | 100 | | | | | | | | |
| 47 | 97.5 | | | 2.5 | | | | | |
| 48 | 95.0 | | | 5.0 | | | | | |
| 49 | 97.0 | 3.0 | | | | | | | |
| 50 | 95.0 | | 5.0 | | | | | | |
| 51 | | | | | | 15.0 | | | |
| 52 | | | | | | 1.0 | | | |
| 53 | 9.9 | | | | | | 90. 1 | | |
| 54 | 14.9 | | | | | | 85. 1 | | |
| 55 | 10.3 | | | | | | | 89. 7 | |
| 56 | 16.0 | | | | | | | 84. 0 | |
| 57 | 99.5 | | | | | | | | 0.5 |
| 58 | 90.0 | | | | | | | | 10.0 |
| 59 | | | | | 10.0 | | | | |

**Table No. 8**

| Sample compositions (parts per hundred in water) | | | | | | | |
|---|---|---|---|---|---|---|---|
| MISCELLANEOUS PREPRIMER SAMPLES | | | | | | | |
| | Maize Starch | 36 LAC 14 | C5 | LNP | 15000DS | AT66 | T23005 |
| 60 | 1.0 | | | | | | |
| 61 | 10.0 | | | | | | |
| 62 | | | | | | 0.5 | |
| 63 | | | | | | 3.0 | |
| 64 | | | | | | | 0.5 |
| 65 | | | | | | | 5.0 |
| 66 | | | 0.2 | | | | |
| 67 | | | 4.0 | | | | |
| 68 | | 1.0 | | | | | |
| 69 | | 20.0 | | | | | |
| 70 | | | | 100.0 | | | |
| 71 | | | | | 0.1 | | |
| 72 | | | | | 2.0 | | |

**Table No. 9**

| Page Pull Results (43gsm catalogue paper) | | | | |
|---|---|---|---|---|
| PAGE PULL RESULTS (Various preprimers) | | | | |
| SAMPLE No. | RESULT (N/cm) | | SAMPLE No. | RESULT (N/cm) |
| 1 | 3.7 | | 31 | 8.6 |
| 2 | 8.2 | | 32 | 2.7 |
| 3 | 8.6 | | 33 | 8.1 |
| 4 | 6.2 | | 34 | 4.5 |
| 5 | 10.5 | | 35 | 7.6 |
| 6 | 5.5 | | 36 | 5.3 |
| 7 | 4.5 | | 37 | 5.1 |
| 8 | 9.0 | | 38 | 4.6 |
| 9 | 8.3 | | 39 | 5.5 |
| 10 | 7.1 | | 40 | 5.9 |
| 11 | 7.4 | | 41 | 4.2 |
| 12 | 5.7 | | 42 | 3.3 |
| 13 | 3.9 | | 43 | 5.3 |
| 14 | 11.3 | | 44 | 3.3 |
| 15 | 7.8 | | 45 | 5.0 |
| 16 | 8.8 | | 46 | 3.5 |
| 17 | 8.5 | | 47 | 5.9 |
| 18 | 3.9 | | 48 | 2.7 |
| 19 | Ref Table 2 | | 49 | 4.5 |
| 20 | 6.5 | | 50 | 4.8 |
| 21 | 11.5 | | 51 | 4.3 |
| 22 | 9.5 | | 52 | 2.4 |
| 23 | 9.8 | | 53 | 3.5 |
| 24 | 5.8 | | 54 | 2.8 |
| 25 | 4.8 | | 55 | 2.9 |
| 26 | 6.6 | | 56 | 2.7 |
| 27 | 6.5 | | 57 | 2.6 |
| 28 | 2.9 | | 58 | 2.8 |
| 29 | 4.5 | | 59 | 2.8 |
| 30 | 4.8 | | 60 | 1.8 |
| 61 | 1.1 | | 67 | 3.1 |
| 62 | 3.3 | | 68 | 3.5 |
| 63 | 1.8 | | 69 | 3.9 |
| 64 | 2.8 | | 70 | 2.9 |
| 65 | 2.9 | | 71 | 3.2 |
| 66 | 3.2 | | 72 | 4.9 |

**Table 10**

| Evaluation of formulated primer (43gsm catalogue paper) | | | | | | |
|---|---|---|---|---|---|---|
| Page pulls | Preprimer | PRIMER | | | | |
| N/cm | | T R501 | Airflex 426 | BDGA | Polyol 1028A | Dispex N40 |
| 2.2 | None | 97.0 | | 3.0 | | |
| 1.7 | None | 95.0 | | | 5.0 | |
| 2.2 | None | 97.5 | | | | 2.5 |
| 0.7 | None | | 97.0 | 3.0 | | |
| 1.2 | None | | 95.0 | | 5.0 | |
| 1.6 | None | 100.0 | | | | |
| 4.0 | 16%A205 | 100.0 | | | | |
| 6.0 | 16%A205 | | 100.0 | | | |

**Table 11**

| Evaluation of formulated primer (43gsm catalogue paper) | | | | |
|---|---|---|---|---|
| Page pulls | Preprimer | PRIMER | | |
| N/cm | | Vinnapas EP400 | Water | Airvol 205 |
| 1.1 | None | 90.0 | 10.0 | |
| 6.5 | 10.8% Airvol 205 | 90.0 | 10.0 | |
| 5.7 | None | 54.0 | 41.0 | 5.0 |
| 7.2 | 10.8% Airvol 205 | 54.0 | 41.0 | 5.0 |

**Table 12**

| RAW MATERIALS | | |
|---|---|---|
| Abreviation | Trade Name | Description |
| A107 | Airvol A107 | Polyvinyl Alcohol hydrolysis 98-98.8%, viscosity 3.5-4.5 mPa.s |
| A205 | Airvol A205 | Polyvinyl Alcohol hydrolysis 87-89%, viscosity 5.2-6.2mPa.s |
| 17/88 | PVOH 17/88S | Polyvinyl Alcohol hydrolysis 86-90%, viscosity 20-26 mPa.s |
| A1126 | Gohsenol A1126 | Polyvinyl Alcohol hydrolysis 97-98.8%, viscosity 59-66 mPa.s |
| Bdga | Butyl diglycol acetate | 2-(2-butoxyechoxy) ethyl acetate |
| Polyol 1028 | Arcol Polyol 1028A | Polypropylene glycol |
| D 1490 | Dodigen 1490 | Dicoco alkyl dimethyl ammonium chloride |
| VR 90 | Stepantex VR 90 | Dialkyl esterammonium sethosulphate |
| DC 90 | Stepantex DC 90 | Dialkyl ammonium methosulphate |
| A4M | Methocel A4M Premium | Methyl cellulose |
| CRT 30G | Walocel CRT 30 G | Sodium carboxymethyl cellulose |
| CRT 100G | Walocel CRT 100 G | Sodium carboxymethyl cellulose |
| MW 400GB | Walocel MW 400 GB | Methyl hydroxyethyl cellulose |
| XC 1000C | Walocel XC 3000 C | Sodium carboxymethyl cellulose |
| N40 | Dispex N40 | Sodium salt of a polymeric carboxylic acid in aqueous solution |
| glucose | Glucose syrup | Glucose syrup, 80% solids, dextrose equivalent = 41 |
| PVP K60 | PVP K60 | Polyvinyl pyrrolidone, 45% solution |
| EP400 | Macker EP400 | Vinyl acetate ethylene aqueous dispersion, 55% solids, 2400 mPa.s |
| B481 | Vinamil B481 | Polyvinyl acetate aqueous dispersion, 55% solids, 3000 mPa.s |
| V205 | Acronal V205 | Acrylate copolymer aqueous dispersion, 69% solids, 600-1600 mPa.s viscosity |
| Corn search | Corn starch | Corn starch |
| 36 LAC 14 | Avedex 36 LAC 14 | Starch based yellow potato dextrin, dextrose equivalent = 2-3q/100g |
| C5 | Solvitose C5 | Pregelatinised, carboxymethyl other of maize starch |
| LNP | Liquid natural polymer | Octyl succinic anhydride modified waxy maize search solution |
| L75N | Borchigel L75N | Liquid, non ionic polyurethane based chickening agent, 54% in water |
| HPM 15000s | Celacol HPM 15000 DS | Hydroxy propylmethyl cellulose, medium substitution, viscosity 13,000-17,000 mPa.s |
| AT66 | Viscalex AT66 | 40% active polyacrylamide polymer in di-n-butyl phthalate |
| T23005 | Texigel 23005 | Sodium polyacrylate, 15% aqueous solution, viscosity 50-100 Pa.s |
| Urea | Urea | Carbamide |
| Glycerine | Glycerine | 1,2,3-Propanetriol |
| Benzoflex 50 | Benzoflex 50 | 50.50 mixture of diethylene glycol dibenzoate and dipropylene glycol dibenzoate |
| Water | Water | standard mains water |

Examples of books made using the preprimer and the apparatus described above will now be described.

### Trial 1

The machine used for the test was a Müller Martini Normbinder 2 with a Nordson Nozzle EP11 and a Nordson Drummelter BM505. The machine was set at 145°C and was amended to have the preprimer/primer station described above. The spine adhesive in this instance was applied to the cover.

The types of paper tested were:
1. 80gsm offset paper.
2. 80gsm LWC.
3. 115gsm KNP glossy paper.
4. 115gsm KNP matt coated.
5. 135gsm KNP glossy paper.

Papers were tested using different thickness of glue films of 0.05mm, 0.1mm, 0.2mm at speeds of 4,000, 6,000 and 8,000 book blocks per hour. The preparation of the book block comprised a cutter, an equaliser and a sanding disk. The books bound using this process resulted in for offset paper for the normal binding process a page pull strength of 5 to 10 N/cm but using a preprimer a page pull strength of 14 to 16 N/cm. For triple coated gloss paper (115gsm) with the normal binding process 2 N/cm but with a preprimer 7 N/cm to page tear.

### Trial 2

The machine set up was the same as described for Trial 1. The primer rollers were set to the minimum coating possible, (almost dry), but still allowing a wet spine at the hot melt nozzle, even after drying with IR lamps.

The paper types tested were:
E1 uncoated offset paper, 50gsm.
E2 slightly coated offset paper, 70gsm.
E3 triple coated paper, 135gsm.

The preprimer used was polyvinyl alcohol, primer used was Twinflex R501 (vinylacetate ethylene aqueous disperson), and the adhesive used was Perfect83/1 (reactive hot melt).

The results were as follows with a glue thickness of 0.2mm and a speed of 4200 book blocks per hour:

| | | |
|---|---|---|
| Paper E1, | 8.8 | N/cm after 8 minutes, paper tear |
| | 8.4 | N/cm after 2 hours, paper tear |
| Paper E2, | 5.0 | N/cm after 5 minutes |
| | 5.6 | N/cm after 15 minutes, slight paper tear |
| | 7.5 | N/cm after 100 minutes, slight paper tear |
| Paper E3, | 2.4 | N/cm after 8 minutes |
| | 2.0 | N/cm after 20 minutes |
| | 3.3 | N/cm after 80 minutes |

The- preprimer was set high for paper E3. The application of the preprimer resulted in no bleeding into the pages of the books thus produced.

Subsequent page pull tests after storage for 48 hours at 23°C and 50% relative humidity gave the following results.
Paper E1 8.7 N/cm, total paper tear
Paper E2 8.2 N/cm, total paper tear
Paper E3 7.4 N/cm.

Where the terms "comprise", "comprises", "comprised" or "comprising" are used in this specification, they are to be interpreted as specifying the presence of the stated features, integers, steps or components referred to, but not to preclude the presence or addition of one or more other feature, integer, step, component or group thereof.

## Claims

1. A book binding apparatus comprising a station (10) for creating a book block, a station (12) for roughening the spine of the book block, a station (18) for gluing a cover to the spine of the book block, a station (16) for coating the spine of the book with primer, and a station (14) for pre-priming the spine of the book block, wherein the priming station is located between the pre-priming station and the gluing station and the pre-priming station is located between the roughening station and the gluing station.

2. An apparatus according to Claim 1, **characterised in that** the pre-priming station (14) and the priming station (16) are constructed such that they are part of a combined station.

3. An apparatus of Claim 2, **characterised in that** the combined station comprises a bath (30) with two rollers (32) for adding the pre-primer and the primer to the spine of the book block with a wall (34) dividing the bath (30) between the two rollers (32) so that the two fluids do not mix.

4. A method of binding sheet material to produce a book which comprises the step of creating a book block from individual sheets of sheet material, preparing the intended spine for binding, and gluing a cover to the spine, **characterised in that** the method includes the further step of applying a pre-primer to the spine before the cover is glued to the spin, wherein said pre-primer comprises water or an aqueous solution.

5. A method according to Claim 4, **characterised in that** the method includes the further step of coating the spine of the book with a primer between coating the spine with pre-primer and gluing the cover.

6. A method according to Claim 4 or Claim 5, **characterised in that** the aqueous solution comprises a compound selected from the group consisting of polyvinyl alcohols, cellulosics, starches, synthetic polymer dispersions, water soluble or dispersable polymers, surfactants and mixtures thereof.

7. A method according to any one of Claims 4 to 6, **characterised in that** the polyvinyl alcohol is selected from the group consisting of Polyvinyl Alcohol hydrolysis 98-100%, viscosity 3.5-72 mPa.s, Polyvinyl Alcohol hydrolysis 95-98.8%, viscosity 3.5-72 mPa.s, Polyvinyl Alcohol hydrolysis 86-89%, viscosity 3.0-56 mPa.s, Polyvinyl Alcohol hydrolysis 71-82%, viscosity 4-52 mPa.s, Polyvinyl Alcohol hydrolysis 42-50%, viscosity 55-63 mPa.s and mixtures thereof.

8. A method according to Claim 7, **characterised in that** the polyvinyl alcohol comprises 1 to 25wt% of the solution.

9. A method according to Claim 8, **characterised in that** the polyvinyl alcohol comprises 5 to 25wt% of the solution.

10. A method according to Claim 8 or Claim 9, **characterised in that** the polyvinyl alcohol comprises 15 to 18wt% of the solution.

11. A method according to any one of Claims 7, **characterised in that** the polyvinyl alcohol has a low degree of polymerization.

12. A method according to Claim 6, **characterised in that** the cellulosic is selected from the group consisting of hydroxyethyl cellulose, hydroxypropylmethyl cellulose, carboxymethyl cellulose, ethylhydroxyethyl cellulose, hydrophobically modified hydroxyethyl cellulose and mixtures thereof.

13. A method according to Claim 12, **characterised in that** the cellulose has a low molecular weight.

14. A method according to Claim 12 or Claim 13, **characterised in that** the cellulose comprises 0.1 to 3.0 wt% of the solution.

15. A method according to Claim 6, **characterised in that** the starch is selected from the group consisting of cereal starches, such as corn, wheat, rice or barley, tuber and root starches such as potatoes, tapioca roots or arrow root or sago starches, etherified or esterified starches.

16. A method according to Claim 15, **characterised in that** the starch comprises 0.1 to 20.0 wt% solution.

17. A method according to Claim 6, **characterised in that** the synthetic polymer dispersion is selected from the group consisting of polyvinyl acetates, vinyl acetate/ethylene copolymers, acrylics, starch grafted acrylics, vinyl acetate/ethylene/acrylic acid ester terpolymers, polyurethanes, vinyl priopionates, acrylates such as methyl acrylate, ethyl acrylate, 2-ethylhexyl acrylate, butyl acrylate, copolymers of vinyl acetate with vinyl laurate, maleic acid ester, vinyl chloride, crotonic acid and versatic ester of versatic acid, styrene acrylic acid esters and mixtures thereof.

18. A method according to Claim 17, **characterised in that** the synthetic polymer dispersion is between 0.5 and 90% dispersion.

19. A method according to Claim 17 or Claim 18, **characterised in that** the synthetic polymer dispersion is between 40.60 and 50.0%.

20. A method according to Claim 6, **characterised in that** the water soluble or dispersable polymer comprises a polymer selected from the group consisting of ethylene glycol diacetate, glycerol triacetate, glycerol diacetate, triethylene glycol, sodium polyacrylate, carbamide, 1,2,3,-propanetriol, polyvinyl pyrrolidone, 2-(2-butoxyethoxy)ethyl acetate, carbitol acetate, butyl carbitol acetate, butyl carbitol, ethyl carbitol, butyl cellusolve, ethyl cellosolve, 2,2,4-trimethyl 1,3-pentane diol monoisobutyrate, 2,2,4-thrmethyl 1,3-pentane diol diisobutyrate, 2,2,4-trimethyl 1,3-pentane diol, polyurethane, acrylate esters, xanthan gum, guar gum, alkali swellable acrylic based associative thickeners, hydrophobe modified ethoxylate urethane, polyacrylic acid, sulphonated polystyrene, polethylene oxide, polyalkylene glycol and mixtures thereof.

21. A method according to Claim 6, **characterised in that** the surfactant is selected from the group consisting of alcohol ethoxylates, castor oil ethoxylates, aromatic ethowylate, fatty acid sulphonate, dodecyl benzene sulphonic acids, coconut diethanolamides, fatty acid esters, ethoxylated alkyloamides, alkyl amphodiacetates, amido betaines, amine betaines, alkyl benzene sulphonic acids and salts, alkyl sulphosuccinates, alkyl sulphosuccinamates, alpha olefin sulphonates, aromatic hydrocarbon sulphonic acids and blends, aromatic hydrocarbon sulphonate salts and consensates, fatty alcohol ethoxy sulphates, fatty alcohol sulphates, phosphates esters, alkyl dimethylamines, quarternary ammonium compounds, alkyl phenol ethoxylates, amine oxides, ethylene glycol esters, ethylene oxide/propylene oxide condensates, fatty acid dialkanolamides, fatty acid momoalkanolamides, fatty acid monoalkanolamide ethoxylates, fatty amine alkoxylates, fatty alcohol ethoxylates, fatty alcohols and mixtures thereof.

22. A book produceable by the method of any of claims 4 to 21.

## Patentansprüche

1. Apparatur zum Buchbinden, umfassend eine Station (10) zur Bildung eines Buchblocks, eine Station (12) zum Aufrauhen des Rückens des Buchblocks, eine Station (18) zum Leimen eines Einbands auf den Rücken des Buchblocks, eine Station (16) zum Beschichten des Rückens des Buchs mit Grundiermittel und eine Station (14) zur Vorgrundierung des Rückens des Buchblocks, wobei die Grundierungsstation zwischen der Vorgrundierungsstation und der Leimungsstation angeordnet ist und die Vorgrundierungsstation zwischen der Aufrauhstation und der Leimungsstation angeordnet ist.

2. Apparatur nach Anspruch 1, **dadurch gekennzeichnet, daß** die Vorgrundierungsstation (14) und die Grundierungsstation (16) so konstruiert sind, daß sie Teil einer kombinierten Station sind.

3. Apparatur nach Anspruch 2, **dadurch gekennzeichnet, daß** die kombinierte Station ein Bad (30) mit zwei Walzen (32) zum Aufbringen des Vorgrundiermittels und des Grundiermittels auf den Rücken des Buchblocks umfaßt, wobei eine Wand (34) das Bad (30) zwischen den zwei Walzen (32) teilt, so daß sich die zwei Fluide nicht vermischen.

4. Verfahren zum Binden von Blattmaterial zur Herstellung eines Buches, das den Schritt der Bildung eines Buchblocks aus einzelnen Blattern aus Blattmaterial, die Herstellung des vorgesehenen Rückens zum Binden, und Leimen eines Einbands auf den Rücken umfaßt, **dadurch gekennzeichnet, daß** das Verfahren den weiteren Schritt des Auftragens eines Vorgrundiermittels auf den Rücken, bevor der Einband auf den Rücken geleimt wird, umfaßt, wobei das Vorgrundiermittel Wasser oder eine wäßrige Lösung umfaßt.

5. Verfahren nach Anspruch 4, **dadurch gekennzeichnet, daß** das Verfahren die weitere Stufe eines Beschichtens des Rückens des Buches mit einem Grundiermittel zwischen dem Beschichten des Rückens mit dem Vorgrundiermittel und dem Leimen des Deckels umfaßt.

6. Verfahren nach Anspruch 4 oder Anspruch 5, **dadurch gekennzeichnet, daß** die wäßrige Lösung eine Verbindung, ausgewählt aus der Gruppe bestehend aus Polyvinylalkoholen, Cellulosen, Stärken, synthetischen Polymerdispersionen, wasserlöslichen oder dispergierbaren Polymeren, oberflächenaktiven Mitteln und Gemischen davon, umfaßt.

7. Verfahren nach einem der Ansprüche 4 bis 6, **dadurch gekennzeichnet, daß** der Polyvinylalkohol aus der Gruppe bestehend aus Polyvinylalkohol mit einem Hydrolysegrad von 98 bis 100 %, einer Viskosität von 3,5 bis 72 mPa.s, Polyvinylalkohol mit einem Hydrolysegrad von 95 bis 98,8 % und einer Viskosität von 3,5 bis 72 mPa.s, Polyvinylalkohol mit einem Hydrolysegrad von 86 bis 89 % und einer Viskosität von 3,0 bis 56 mPa.s, Polyvinylalkohol mit einem Hydrolysegrad von 71 bis 82 % und einer Viskosität von 4 bis 52 mPa.s, Polyvinylalkohol mit einem Hydrolysegrad von 42 bis 50 % und einer Viskosität von 55 bis 63 mPa.s und Gemischen davon, ausgewählt wird:

8. Verfahren nach Anspruch 7, **dadurch gekennzeichnet, daß** der Polyvinylalkohol 1 bis 25 Gew.-% der Lösung ausmacht.

9. Verfahren nach Anspruch 8, **dadurch gekennzeichnet, daß** der Polyvinylalkohol 5 bis 25 Gew.-% der Lösung ausmacht.

10. Verfahren nach Anspruch 8 oder Anspruch 9, **dadurch gekennzeichnet, daß** der Polyvinylalkohol 15 bis 18 Gew.-% der Lösung ausmacht.

11. Verfahren nach Anspruch 7, **dadurch gekennzeichnet, daß** der Polyvinylalkohol einen niedrigen Polymerisationsgrad hat.

12. Verfahren nach Anspruch 6, **dadurch gekennzeichnet, daß** die Cellulose aus der Gruppe, bestehend Hydroxyethylcellulose, Hydroxypropylmethylcellulose, Carboxymethylcellulose, Ethylhydroxyethylcellulose, hydrophob modifizierter Hydroxyethylcellulose und Gemischen davon, ausgewählt wird.

13. Verfahren nach Anspruch 12, **dadurch gekennzeichnet, daß** die Cellulose ein niedriges Molekulargewicht hat.

14. Verfahren nach Anspruch 12 oder 13, **dadurch gekennzeichnet, daß** die Cellulose 0,1 bis 3,0 Gew.-% der Lösung ausmacht.

15. Verfahren nach Anspruch 6, **dadurch gekennzeichnet, daß** die Stärke aus der Gruppe, bestehend aus Getreidestärken wie Mais-, Weizen-, Reis- oder Gerstestärke, Knollenund Wurzelstärken wie Kartoffeln, Tapiokawurzeln oder Pfeilwurz-Wurzeln oder Sagostärken, veretherten oder veresterten Stärken, ausgewählt wird.

16. Verfahren nach Anspruch 15, **dadurch gekennzeichnet, daß** die Stärke 0,1 bis 20 Gew.-% der Lösung ausmacht.

17. Verfahren nach Anspruch 6, **dadurch gekennzeichnet, daß** die synthetische Polymerdispersion aus der Gruppe, bestehend Polyvinylacetaten, Vinylacetat/Ethylen-Copolymeren, Acrylharzen, mit Stärke gepfropften Acrylharzen, Vinylacetat/Ethylen/Acrylsäureester-Terpolymeren, Polyurethanen, Vinylpropionaten, Acrylaten wie z.B. Methylacrylat, Ethylacrylat, 2-Ethylhexylacrylat, Butylacrylat, Copolymeren von Vinylacetat mit Vinyllaurat, Maleinsäureester, Vinylchlorid, Crotonsäureester und Versatinsäureester, Styrolacrylsäureestern und Gemischen daraus, ausgewählt wird.

18. Verfahren nach Anspruch 17, **dadurch gekennzeichnet, daß** die synthetische Polymerdispersion eine 0,5%ige bis 90%ige Dispersion ist.

19. Verfahren nach Anspruch 17 oder Anspruch 18, **dadurch gekennzeichnet, daß** die Dispersion des synthetischen Polymeren 40,60%ig bis 50,0%ig ist.

20. Verfahren nach Anspruch 6, **dadurch gekennzeichnet, daß** das wasserlösliche oder dispergierbare Polymer ein Polymer umfaßt, das aus der Gruppe, bestehend aus Ethylenglycoldiacetat, Glycerintriacetat, Glycerindiacetat, Triethylenglycol, Natriumpolyacrylat, Carbamid, 1,2,3-Propantriol, Polyvinylpyrrolidon, 2-(2-Butoxyethoxy)ethylacetat, Carbitolacetat, Butylcarbitolacetat, Butylcarbitol, Ethylcarbitol, Butylcellusolve, Ethylcellusolve, 2,2,4-Trimethyl-1,3-pentandiol-monoisobutyrat, 2,2,4-Trimethyl-1,3-pentandiol-diisobutyrat, 2,2,4-Trimethyl-1,3-pentandiol, Polyurethan, Acrylestern, Xanthangummi, Guargummi, mit Alkali quellbare, assoziative Verdickungsmittel auf Acryl-Basis, hydrophobem, modifizierten, ethoxylierten Urethan, Polyacrylsäure, sulfoniertem Polystyrol, Polyethylenoxid, Polyalkylenglycol und Gemischen davon ausgewählt wird.

21. Verfahren nach Anspruch 6, **dadurch gekennzeichnet, daß** das oberflächenaktive Mittel aus der Gruppe bestehend aus Alkoholethoxylaten, Rizinusölethoxylaten, aromatischem Ethoxylat, Fettsäuresulfonat, Dodecylbenzolsulfonsäuren, Kokosnußdiethanolamiden, Fettsäureestern, ethoxylierten Alkylamiden, Alkylamphodiacetaten, Amidobetainen, Aminbetainen, Alkylbenzolsulfonsäuren und Salzen, Alkylsulfosuccinaten, Alkylsulfosuccinamaten, alpha-Olefinsulfonaten, aromatischen Kohlenwasserstoffsulfonsäuren und Gemischen, aromatischen Kohlenwasserstoffsulfonsäuren und Gemischen, aromatischen Kohlenwasserstoffsulfonatsalzen und Kondensaten, Fettalkoholethoxysulfaten, Fettalkoholsulfaten, Phosphatestern, Alkylmethylaminen, quaternären Ammonium-Verbindungen, Alkylphenolethoxylaten, Aminoxiden, Ethylenglycolestern, Ethylenoxid/Propylenoxid-Kondensaten, Fettsäuredialkanolamiden, Fettsäuremonoalkanolamiden, Fettsäuremonoalkanolamidethoxylaten, Fettaminalkoxylaten, Fettalkoholethoxylaten, Fettalkolen und Gemischen davon, ausgewählt wird.

22. Buch, das nach dem Verfahren nach einem der Ansprüche 4 bis 21 herstellbar ist.

## Revendications

1. Un dispositif de reliure de livre comprenant un poste (10) pour créer un bloc formant livre, un poste (12) pour dégrossir le dos du bloc formant livre, un poste (18) pour coller une couverture sur la dos du bloc formant livre, un poste (16) pour recouvrir le dos du livre avec une couche de fond, et un poste (14) d'application d'une couche de fond préalable sur le dos du bloc formant livre, dans lequel le poste d'application de couche de fond est situé entre le poste d'application de couche de fond préalable et le poste de collage et dans lequel le poste d'application de couche de fond préalable est situé entre le poste de dégrossissage et le poste de collage.

2. Un dispositif selon la revendication 1, **caractérisé en ce que** le poste d'application de couche de fond préalable (14) et le poste d'application de couche de fond (16) sont réalisés de telle manière qu'ils font partie d'un poste conjugué.

3. Un dispositif de la revendication 2, **caractérisé en ce que** le poste conjugué comprend un bain (30) avec deux galets (32) pour contribuer à la couche de fond préalable et à la couche de fond sur le dos du bloc formant livre avec une paroi (34) divisant le bain (30) entre les deux galets (32) de manière que les deux fluides ne se mélangent pas.

4. Un procédé de reliure de matière en feuille pour produire un livre qui comprend l'étape consistant à créer un bloc formant livre à partir de feuilles individuelles de matière en feuille, préparer le dos prévu en vue de sa reliure, et coller une couverture sur le dos, **caractérisé en ce que** le procédé comprend l'étape supplémentaire consistant à appliquer, sur le dos, une couche de fond préalable avant que le couvercle soit collé sur le dos, ladite couche de fond préalable comprenant de l'eau ou une solution aqueuse.

5. Un procédé selon la revendication 4, **caractérisé en ce que** le procédé comprend l'étape supplémentaire consistant à recouvrir le dos du livre avec une couche de fond entre l'opération de recouvrement du dos avec la couche de fond préalable et le collage de la couverture.

6. Un procédé selon la revendication 4 ou la revendication 5, **caractérisé en ce que** la solution aqueuse comprend un composé choisi dans le groupe se composant des alcools polyvinyliques, des matières cellulosiques, des amidons, des dispersions de polymères de synthèse, des polymères solubles ou dispensables dans l'eau, des tensioactifs et de leurs mélanges.

7. Un procédé selon une quelconque des revendications 4 à 6, **caractérisé en ce que** l'alcool polyvinylique est choisi dans le groupe se composant d'Alcool Polyvinylique hydrolysé à 98-100%, d'une viscosité de 3,5-72 mPa.s, d'Alcool Polyvinylique hydrolysé à 95-98,8%, d'une viscosité de 3,5-72 mPa.s, d'Alcool Polyvinylique hydrolysé à 86-89%, d'une viscosité de 3,0-56 mPa.s ; d'Alcool Polyvinylique hydrolysé à 71-82%, d'une viscosité de 4-52 mPa.s, d'Alcool Polyvinylique hydrolysé à 42-50%, d'une viscosité de 55-63 mPa.s et de leurs mélanges.

8. Un procédé selon la revendication 7, **caractérisé en ce que** l'alcool polyvinylique comprend 1 à 25% en poids de la solution.

9. Un procédé selon la revendication 8, **caractérisé en ce que** l'alcool polyvinylique comprend de 5 à 25% en poids de la solution.

10. Un procédé selon la revendication 8 ou la revendication 9, **caractérisé en ce que** l'alcool polyvinylique comprend de 15 à 18% en poids de la solution.

11. Un procédé selon l'une quelconque des revendication 7 à 10, **caractérisé en ce que** l'alcool polyvinylique présente un faible degré de polymérisation.

12. Un procédé selon la revendication 6, **caractérisé en ce que** le produit cellulosique est choisi dans le groupe se composant d'hydroxyéthyl cellulose, d'hydroxypropylméthyl cellulose, de carboxyméthyl cellulose, d'éthylhydroxyéthyl cellulose, d'hydroxyéthyl cellulose modifié de manière hydrophobe et de leurs mélanges.

13. Un procédé selon la revendication 12, **caractérisé en ce que** la cellulose présente un faible poids moléculaire.

14. Un procédé selon la revendication 12 ou la revendication 13, **caractérisé en ce que** la cellulose comprend de 0,1 à 3% en poids de la solution.

15. Un procédé selon la revendication 6, **caractérisé en ce que** l'amidon est choisi dans le groupe se composant d'amidons de céréales, tel que de maïs, de blé, de riz ou d'orge, d'amidons de tubercules et de racines tels que de pommes de terre, de racines de tapioca ou des amidons de racine de marante ou de sagou, des amidons éthérifiés ou estérifiés.

16. Un procédé selon la revendication 15, **caractérisé en ce que** l'amidon comprend de 0,1 à 20,0% de la solution.

17. Un procédé selon la revendication 6, **caractérisé en ce que** la dispersion de polymères de synthèse est choisie dans le groupe se composant d'acétates de polyvinyle, de copolymères d'acétate de vinyle/éthylène, de matières acryliques, de matières acryliques à greffage d'amidon, de terpolymères d'acétate de vinyle/éthylène/ester d'acide acrylique, de polyuréthannes, de priopionates de vinyle, d'acrylates tels que l'acrylate de méthyle, l'acrylate d'éthyle, l'acrylate de 2-éthylhexyle, l'acrylate de butyle, des copolymères d'acétate de vinyle avec du lauréate de vinyle, de l'ester d'acide maléïque, du chlorure de vinyle, de l'acide crotonique et de l'ester versatique de l'acide versatique, des esters d'acide acrylique styrène et de leurs mélanges.

18. Un procédé selon la revendication 17, **caractérisé en ce que** la dispersion de polymères de synthèse est une dispersion entre 0,5 et 90%.

19. Un procédé selon la revendication 17 ou la revendication 18, **caractérisé en ce que** la dispersion de polymères de synthèse est entre 10,60 et 50,0%.

20. Un procédé selon la revendication 6, **caractérisé en ce que** le polymère soluble ou dispersable dans l'eau comprend un polymère choisi dans le groupe se composant de diacétate d'éthylène glycol, de triacétate de glycérol, de diacétate de glycérol, de triéthylène glycol, de polyacrylate de sodium, de carbamide, de 1,2,3-propanétriol, de polyvinyl pyrrolidone, d'acétate de 2-(2-butoxyéthoxy) éthyle, d'acétate de carbitol, d'acétate de butyl carbitol, de butyl carbitol, d'éthyl carbitol, de butyl cellusolve, d'éthyl cellusolve, de monoisobutyrate de 2,2,4-triméthyl 1,3-pentane diol, de diisobutyrate de 2,2,4-triméthyl 1,3-pentane diol, de 2,2,4-triméthyl 1,3-pentane diol, de polyuréthanne, d'esters d'acrylate, de gomme de xanthan, de gomme de guar, d'épaississeurs associatifs à base de matières acryliques gonflables dans les alcalins, de l'uréthane d'éthoxylate modifié de manière hydrophobe, de l'acide polyacrylique, de polystyrène sulfoné, de l'oxyde de polyéthylène, de polyalkylène glycol et des mélanges de ceux-ci.

21. Un procédé selon la revendication 6, **caractérisé en ce que** le tensio-actif est choisi dans le groupe se composant d'éthoxylates d'alcool, d'éthoxylates d'huile de ricin, d'éthoxylates aromatiques, de sulfonate d'acide gras, d'acides sulfoniques de dodécyl benzène, de diéthanolamides de noix de coco, d'esters d'acides gras, des alkyloamides éthoxylés, des amphodiacétates d'alkyle, des amido bétaïnes, des amino bétaïnes, des acides sulfoniques de benzène alkyle et leurs sels, des sulphosuccinates d'alkyle, des sulphosuccimates d'alkyle, des sulfonates d'alpha oléfine, des acides sulphoniques aromatiques et leurs mélanges, des sels sulfonates aromatiques et leurs condensés, des éthoxy sulfates d'alcool gras, des sulfates d'alcool gras, des esters de phosphates, des diméthylamines d'alkyle, des composés d'ammonium quaternaires, des éthoxylates d'alkyl phénol, des amino oxydes, des esters d'éthylène glycol, des condensats d'oxyde d'éthylène/oxyde de propylène, des dialkanolamides d'acide gras, des momoalkanolamides d'acides gras, des éthoxylates de monoalkanolamide d'acide gras, des alkoxylates d'amine gras, des éthoxylates d'alcool gras, des alcools gras et de leurs mélanges.

22. Un livre pouvant être produit par le procédé d'une quelconque des revendications 4 à 21.
